# EUROPÄISCHE PATENTSCHRIFT

(11) **EP 2 029 073 B1**
(45) Veröffentlichungstag und Bekanntmachung des Hinweises auf die Patenterteilung: **25.11.2009**
(21) Anmeldenummer: 07720179.6
(22) Anmeldetag: 06.06.2007
(51) Int. Cl.: A61F 9/06

(54) **GESICHTS- UND BLENDSCHUTZVORRICHTUNG FÜR PERSONEN IN ARBEITSBEREICHEN MIT GEFÄHRLICHER, SCHÄDLICHER ODER STÖRENDER STRAHLUNG, INSBESONDERE FÜR SCHWEISSER**
FACE AND ANTIGLARE PROTECTION DEVICE FOR PERSONS WORKING IN SITES INVOLVING HAZARDOUS, DAMAGING OR DISTURBING RADIATION, ESPECIALLY WELDERS
DISPOSITIF DE PROTECTION POUR LE VISAGE ET ANTI-ÉBLOUISSEMENT DESTINÉ À DES PERSONNES SE TROUVANT DANS DES ZONES DE TRAVAIL COMPORTANT DES RAYONNEMENTS DANGEREUX, NOCIFS OU PARASITES, EN PARTICULIER À DES SOUDEURS

(30) Priorität: 06.06.2006 CH 902062006
(43) Veröffentlichungstag der Anmeldung: 04.03.2009
(73) Patentinhaber: Eyerex AG, 8834 Schindellegi (CH)
(72) Erfinder: GHISLENI, Livio, 8037 Zürich (CH); WERTHMÜLLER, René, 3257 Ammerzwil (CH)
(74) Vertreter: Alder, Hans Rudi
(86) Internationale Anmeldenummer: PCT/CH2007/000282
(87) Internationale Veröffentlichungsnummer: WO 2007/140642

(56) Entgegenhaltungen:
- FR-A- 2 886 538
- JP-A- 2001 259 883
- US-A1- 2006 010 551

## Beschreibung

Die vorliegende Erfindung betrifft eine Gesichts- und Blendschutzvorrichtung gemäss Oberbegriff von Anspruch 1.

Schutzvorrichtungen für die Beobachtung eines Arbeitsplatzes, an welchem gefährliche Spritzer und/oder Funken und starke Lichtintensitätsunterschiede auftreten - wie dies typischerweise beim Schweissen der Fall ist - sind hinlänglich bekannt. Diese Vorrichtungen weisen in der Regel einen undurchsichtigen Gesichtsschutz in Form einer Maske, eines Helms oder Schildes auf, und sind mit einem Sichtfenster versehen, welches mit einem geeigneten Blendschutz - typischerweise mit einem passiven oder aktiven optischen Filter ausgerüstet ist. Passive optische Filter umfassen verdunkelte, insbesondere dotierte, IR- oder UV-Strahlung blockierende und/oder polarisierende Glas- resp. Kunststoff-Scheiben, während für die aktiven optischen Filter im wesentliche sogenannte ADF's (Automatic Darkening Filter) für Industrieschweisser zum Einsatz kommen. Diese automatisch abdunkelnden Filter weisen elektro-optische Bauteile auf, insbesondere mindestens eine Flüssigkristallzelle und einen lichtempfindlichen Sensor, mit dessen Hilfe der Transmissionswert des optischen Filters in erwünschter Weise automatisch eingestellt wird. Eine geeignete Elektronik zur Steuerung des Transmissionswertes des optischen Filters ist beispielsweise in EP-1'190'689 beschrieben. Der Aufbau eines derartigen optischen Filters ist beispielsweise aus der US-5'930'047 bekannt.

Weiterbildungen dieser Gesichts- und Blendschutzvorrichtungen weisen zusätzliche Sensoren oder Messgeräte auf, deren Signale an eine Elektronik in der Gesichts- und Blendschutzvorrichtung übertragen werden und deren Messwerte in das Sichtfeld des Beobachters eingeblendet werden. Die Übertragung der Signale wird mit Hilfe von Kabeln oder mit Hilfe von Sender / Empfänger Systemen vorgenommen. Die Elektronik in der Gesichts- und Blendschutzvorrichtung wertet die empfangenen Signale aus und steuert eine Anzeige-Vorrichtung, um dem Beobachter, resp. Arbeiter die detektierten Messwerte sichtbar zu machen. Diese Anzeige-Vorrichtungen können als einfache, allenfalls farbcodierte Leuchtdioden-Arrays oder als LCD-Anzeigen ausgebildet sein. Dabei sind Temperaturwerte im unmittelbaren Arbeitsbereich, Werte für die aktuell verwendete Stromstärke des Schweissgeräts oder die Schweisszeit, relevante Werte für den Arbeiter. Beispielhafte Weiterbildungen werden in der EP-0'963'744, US 2006/0010551 oder WO-01112376 beschrieben.

Es ist mit der US-6'230'327 auch schon vorgeschlagen worden, eine Gesichts- und Blendschutzvorrichtung mit einer Kamera auszurüsten, deren Bild auf einem oberhalb des Sichtfensters angeordneten LCD-Bildschirm (Display) angezeigt wird. Durch eine geeignete Wahl der Wellenlängenempfindlichkeit der Kamera, beispielsweise im nahen Infrarot-Bereich zwischen etwa 800 - 1100 nm, können weitere Details im unmittelbaren Schweissbereich - beispielsweise im Bereich des Schweissbads - wahrnehmbar gemacht werden. Diese Bereiche sind mit konventionellen Vorrichtungen nicht erkennbar, weil bei diesen Vorrichtungen die schädlichen IR- und UV-Bereiche herausgefiltert werden.

Leider erweist sich diese Art von Gesichts- und Blendschutzvorrichtung nicht als sehr benutzerfreundlich, da die unterschiedlichen Anzeigen, Bildausschnitte und/oder Detail-Aufnahmen wohl im Sichtbereich des Beobachters liegen, jedoch in unterschiedlichen Blickrichtungsfeldern desselben angeordnet sind. Ausserdem erweisen sich die vorgeschlagenen Lösungen als unverhältnismässig schwer, störungsanfällig, d.h. unzuverlässig und/oder teuer und sind deshalb auch nicht marktfähig.

In der WO-2005/102230 wird ein Schweisserhelm beschrieben, welcher anstelle eines Sichtfensters verschiedene Kameras aufweist. Mit diesen Kameras kann das Arbeitsfeld in verschiedenen Blickrichtungen beobachtet und aufgezeichnet werden. Der Benutzer dieses Schweisserhelms ist frei, den Display einer dieser Kameras zu wählen und ist damit imstande, Orte zu beobachten, welche er mit blossem Drehen des Kopfes nicht erkennen kann. Dieser Schweisserhelm verwendet den Display und die elektronischen Kameras in konventioneller Weise, d.h. kann die beim Schweissen auftretenden extremen Lichtintensitätsunterschiede nicht auffangen. Die mit diesem Schweisserhelm erzeugten Bilder erlauben keine detaillierte Sicht auf den aktuellen Arbeitsplatz.

Es ist deshalb Aufgabe der vorliegenden Erfindung eine Gesichts- und Blendschutzvorrichtung zu schaffen, welche die Nachteile der bekannten Vorrichtungen nicht aufweist. Insbesondere ist es Aufgabe der vorliegenden Erfindung eine kostengünstige und leichtgewichtige Gesichts- und Blendschutzvorrichtung zu schaffen, welche ein Objektfeld mit hohen Lichtintensitätsunterschieden von beispielsweise 10'000 : 1 oder mehr, in ein und demselben Blickrichtungsfeld detailliert erkennbar anzeigt.

Es ist eine weitere Aufgabe der vorliegenden Erfindung eine Gesichts- und Blendschutzvorrichtung zu schaffen, welche dem Beobachter ein räumliches Sehen ermöglicht, d.h. dem Beobachter ein 3-D Bild des Objektfeldes liefert.

Diese Aufgabe wird erfindungsgemäss durch eine Gesichts- und Blendschutzvorrichtung mit den Merkmalen des Anspruchs 1 gelöst und insbesondere durch eine für Schweisser geeignete Gesichts- und Blendschutzvorrichturg für die Beobachtung eines Objektfeldes, resp. Arbeitsplatzes mit zeitlich und räumlich wechselnden Lichtintensitätsunterschieden, welche Vorrichtung mindestens eine elektronische Kamera zur Erzeugung elektronischer Bildsignale, mindestens einen Sensor zur Erzeugung elektronischer Messdaten, mindestens eine Elektronik für die Verarbeitung der Bildsignale und Messdaten, sowie mindestens ein Display für die optisches Anzeige des Objektfeldes und der gemessenen Daten, aufweist, dadurch gekennzeichnet, dass die Vorrichtung mindestens zwei elektronische Kameras mit unterschiedlicher spektraler und/oder räumlicher Auflösung umfasst, wobei die Elektronik Mittel zur Bildanalyse aufweist, welche Bildanalyse-Mittel die Bildsignale dieser unterschiedlichen elektronischen Kameras und vorzugsweise die Messdaten des mindestens einen Sensors analysieren, wobei die Elektronik Mittel zur Erzeugung eines virtuellen Bildes des Objektfeldes aufweist, welche Bilderzeugungs-Mittel die analysierten Bildsignale zu einem virtuellen Bild synthetisieren, derart, dass das gesamte Objektfeld unabhängig von dessen spektralen und topologischen Verhältnissen für das menschliche Auge im Display detailliert erkennbar ist.

Die unterschiedliche Lichtempfindlichkeit der Bildsensoren der einzelnen elektronischen Kameras wird durch die Verwendung von unterschiedlichen Halbleitermaterialien, insbesondere Silizium, Gallium oder Germanium vorbestimmt. Vorteilhafterweise weisen die Kameras der erfindungsgemässen Gesichts- und Blendschutzvorrichtung eine Miniaturoptik auf. Die Elektronik für die Verarbeitung der Bildsignale und Messdaten weist Mittel zur Erzeugung eines virtuellen Bildes des Objektfeldes aufweist.

In einer bevorzugten Ausführungsform umfasst die erfindungsgemässe Gesichts- und Blendschutzvorrichtung für jedes Auge ein Display und weist die Elektronik Mittel zur Erzeugung eines 3-dimensionates virtuelles Bildes (Virtual Reality Image) des Objektfeldes auf, zur Darstellung der topologischen Verhältnisse.

Weiterbildungen der erfindungsgemässen Gesichts- und Blendschutzvorrichtung weisen eine Elektronik mit Mitteln für die Spracherkennung und/oder mit Mitteln für die Erzeugung akustischer Signale auf. Es versteht sich, dass die Elektronik auch mindestens eine zusätzliche Beleuchtungsquelle steuern kann, insbesondere für die Ausleuchtung von Teilbereichen des Objektfeldes in einem besonderen Temperatur- und/oder Helligkeitsbereich. Die Elektronik kann ebenso mit Mittel für die Speicherung benutzerspezifischer Einstellungen, wie Augenabstand, Sehschärfe, Farbgestaltung der Anzeige, etc. ausgerüstet sein oder Mittel für die drahtlose Übermittlung von Datensignalen steuern.

Die Vorteile der vorliegenden Erfindung sind dem Fachmann unmittelbar ersichtlich und insbesondere in der Verwendung der miniaturisierten VR-Bildtechnik auf dem Gebiet der Blendschutztechnik zu sehen. Diese Bildtechnik erlaubt Bilder zu einem virtuellen Bild zu synthetisieren und zwar derart, dass Bereiche des Objektfeldes mit aussergewöhnlich hoher Lichtintensität (Lichtbogen und/oder Schweissbad) und Bereiche des Objektfeldes mit aussergewöhnlich niedriger Lichtintensität (nächtliche Umgebungs-Szene) in demselben Bild detailliert dargestellt werden können und damit dem Beobachter ein Maximum an Informationen zu seinem Arbeitsplatz bereitgestellt werden kann. Dazu dient auch die Anzeige des Objektfeldes in 3-dimensionaler Darstellung, die topologischen Verhältnisse am Arbeitsplatz darzustellen. Dies führt nicht nur zu einer Erhöhung der Arbeitsqualität und -produktivität, sondern dient insbesondere auch der Arbeitssicherheit des Beobachters. Die Miniaturisierung führt zu einer erheblichen Gewichtsersparnis und Benutzerfreundlichkeit. Darüber hinaus ermöglicht die erfindungsgemässe Gesichts- und Blendschutzvorrichtung die Verwendung von kostengünstigen Standardbauteilen.

Im Folgenden soll die Erfindung anhand eines Ausführungsbeispiels und mit Hilfe der Figur näher erläutert werden. Dabei zeigt:

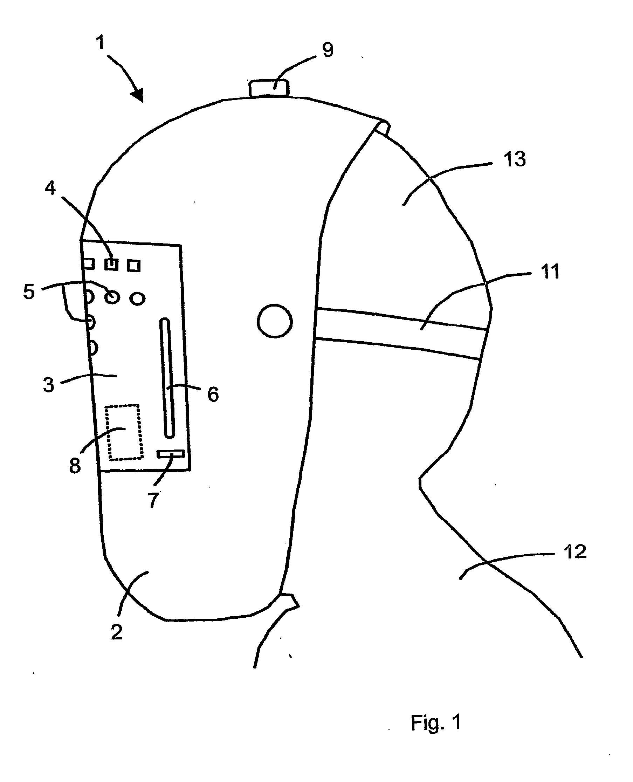

- Fig. 1: Eine schematische Darstellung einer erfindungsgemässen Gesichts- schutz- und Blendschutzvorrichtung.

Figur 1 zeigt in schematischer Weise eine erfindungsgemässe Gesichts- und Blendschutzvorrichtung 1. Diese umfasst im wesentlichen einen Bereich für den Gesichtsschutz 2 und einen Bereich für den Blendschutz 3. Die Gesicht- und Blendschutzvorrichtung 1 besteht vorzugsweise aus einem hitzebeständigen und kratzfesten Material und lässt sich bei der dargestellten Ausführungsform mit Hilfe eines Befestigungsriemens 11 am Kopf 13 eines Beobachters 12 befestigen. Es versteht sich, dass diese Gesicht- und Blendschutzvorrichtung 1 in Form einer Maske, eines Helms oder einer anderen schützenden Abdeckung ausgebildet sein kann. Der Blendschutz 3 der Gesicht- und Blendschutzvorrichtung 1 ist bei der dargestellten Ausführungsform in den Gesichtsschutz 2 der Gesicht- und Blendschutzvorrichtung 1 integriert, kann aber auch mit dem Gesichtsschutz 2 lösbar verbunden sein. Im Folgenden soll also auch eine integrierte Zone im Augenbereich des Gesichtsschutzes 2 als Blendschutz 3 bezeichnet werden. Erfindungsgemäss erlaubt der Blendschutz 3 keine direkte Sicht auf das zu beobachtende Objekt. Damit kann sichergestellt werden, dass keine schädliche Strahlung die Augen des Beobachters 12 erreicht. Um dem Beobachter 12 eine einwandfreie Beobachtung des Arbeitsplatzes oder Objektfeldes zu ermöglichen, ist der Blendschutz 3 erfindungsgemäss mit mindestens zwei unterschiedlichen Kameras 4 ausgerüstet, welche das Arbeitsfeld mit unterschiedlicher spektraler und/oder räumlicher Auflösung aufnehmen. Diese beiden Kameras 4 umfassen miniaturisierte Bildsensoren und eine Miniaturoptik, wie sie bspw. von den heute weit verbreiteten Mobiltelefonen mit Kamerafunktion bekannt sind. Diese beiden Bildsensoren sind erfindungsgemäss mit einer Elektronik 8 verbunden, welche diese Bilder analysiert und zu einem virtuellen Bild zusammensetzt, welches für das menschliche Auge detailliert erkennbar ist. In einer bevorzugten Ausführungsform ist für jedes Auge ein eigenes Display vorgesehen und kann damit für den Beobachter ein dreidimensionales Bild des Objektfeldes erzeugt werden. Dazu werden die Bildsignale der Bildsensoren dieser Kameras 4 einer Elektronik 8 zugeführt, welche diese Signale in gewünschter Weise verarbeitet und zu einem dreidimensionalen Bild synthetisiert. Derartige elektronische Systeme sind hinlänglich bekannt und bspw. in der US-6,084,557 oder WO-2004/084118 beschrieben. Bei diesen Systemen wird ein Objektfeld mittels elektronischen Kameras erfasst und werden die Bildsignale mit virtuellen Bildern verglichen und zu einem neuen VR-Bild (Virtual Reality Image) weiterverarbeitet, bevor diese dem Beobachter zugänglich gemacht werden. Erfindungsgemäss werden die Bildsignale der Kameras 4 derart verarbeitet, dass der Beobachter 12 das Objektfeld, welches Helligkeitsunterschiede resp. Lichtintensitätsunterschiede von beispielsweise 10'000:1 oder mehr aufweisen kann in einem für das menschliche Auge auflösbaren Gesamtbild beobachten kann, d.h. dass die Elektronik 8 die extremen Lichtintensitätsunterschiede erkennt und auf ein für das menschliche Auge auflösbares Mass reduziert. Zur Unterstützung der Elektronik 8 sind weitere Bildsensoren 5 mit unterschiedlicher Empfindlichkeit-vorgesehen. Die Erzeugung eines VR-Bildes liegt im normalen technischen Handelns des Fachmanns und ist nicht Gegenstand der vorliegenden Erfindung.

Es versteht sich, dass die Elektronik 8 mit einer zusätzlichen Software für die Bildanalyse versehen sein kann, welche dem Beobachter während oder nach dem Arbeitsvorgang einzelne Objektelemente einfärbt oder markiert, um dem Beobachter bspw. die Temperaturwerte in einzelnen Bereichen des Objektfeldes anzuzeigen.

Um die topologischen Verhältnisse der Arbeitsumgebung besser zu erfassen erweist es sich als vorteilhaft, andere Kameraeinstellungen als diejenige für die Abbildung des Lichtbogens, insbesondere andere Brennweiten, Blenden, Fokuseinstellungen oder Sensorempfindlichkeiten zu verwenden. Diese Einstellungen lassen sich durch motorische oder manuelle Einstellungsänderungen direkt an der Kamera oder durch Softwarekontrolle erreicht werden. Die Kamerasensoren weisen normalerweise eine Siliziumbasis auf. Mit Hilfe anderer Basismaterialien, wie bspw. Gallium oder Germanium lassen sich andere Spektren, d.h. andere Temperaturbereiche erfassen. Die Kombination von Sensoren mit unterschiedlichen Basismaterialien in zwei oder mehreren Kamerasensoren erlaubt eine genaue Temperaturanalyse des Objektfeldes vorzunehmen und elektronisch darzustellen.

In einer Weiterbildung der vorliegenden Erfindung erlaubt es die Elektronik 8, auf dem Display wichtige Informationen (relevante Parameter zur Arbeitskontrolle oder zu den Zeitabläufen, wie bspw. verwendete Stromstärke, Schweisszeit usw.) anzuzeigen, welche von den Kameras 4 und/oder Sensoren 5 erfasst werden. Diese Zusatzinformationen sind als Text und/oder als Symbole abrufbar und in Verbindung mit einem externen Prozessor resp. elektronischen Speicher bearbeitbar. Dieser externe Prozessor oder Speicher ist per Draht, per Glasfaser oder drahtlos mit der Elektronik 8 verbunden. Für die drahtlose Übermittlung der Daten- resp. Bildsignale sind ein Empfänger 6 und ein Sender 7 in dem Gesichtsschutz 2 vorgesehen. Der Prozessor und/oder Speicher kann am Körper getragen werden oder auf einem geschützten Wagen stationiert sein und nachgezogen werden. Grundsätzlich können zur Verbesserung des Tragekomforts einzelne Teile der vorliegenden Einrichtung, insbesondere die Stromversorgung, statt am Gesichts- und Blendschutz 2,3 an einem Tragegürtel befestigt sein.

Zur Verbesserung der Bildqualität kann der Arbeitsplatz und/oder die Arbeitsumgebung mit einer zusätzlichen Beleuchtung (jegliche Art von Lampen, LED's oder Laser) erhellt werden. Dies wird vorzugsweise mit einem am Gesichtsschutz 2 befestigten Beleuchtungskörper 9 ermöglicht.

Es versteht sich, dass die vorliegende Gesichts- und Blendschutzvorrichtung auch mit einem Mikrophon, einer Spracherkennungssoftware, einem Lautsprecher usw. versehen sein kann, um bspw. gesprochene Befehle wie "Start", "Stop", usw. für die Prozesssteuerung einsetzen zu können. Ebenso können dem Beobachter akustische Signale für die Prozesskontrolle gegeben werden. Weiterbildungen der vorliegenden Erfindung liegen im Bereich des gewöhnlichen fachmännischen Handelns und sind insbesondere in Vorrichtungen zur geometrischen Einstellung (Augenabstand, persönliche Sehschwächen, usw.) der einzelnen Okulare zu sehen. Diese geometrischen Einstellungen können an den einzelnen Kamerasensoren, den Ausgabe-Displays oder anderen Teilen mit Hilfe von Stellschrauben, Schwanenhälsen, usw. individuell vorgenommen werden. Ebenso lässt sich eine Personalisierung der erfindungsgemässen Gesichts- und Blendschutzvorrichtung vornehmen, bspw. durch automatisierte Benutzereinstellungen oder mechanische Identifikationsmittel.

Es versteht sich, dass die vorliegende Vorrichtung nicht nur im Bereich der Schweisstechnik, sondern auch in anderen Arbeitsgebieten wie bspw. Feuerwehr- oder Polizeidiensten verwendet werden kann, d.h. überall dort, wo schwierige Sichtverhältnisse die Arbeit erschweren. Insbesondere kann die vorliegende Gesichts- und Blendschutzvorrichtung auch mit einem miniaturisierten Nachtsichtgerät ausgerüstet sein.
- 1: Gesichts- und Blendschutzvorrichtung
- 2: Gesichtsschutz
- 3: Blendschutz
- 4: Kameras
- 5: Sensoren
- 6: Empfänger
- 7: Sender
- 8: Elektronik
- 9: Beleuchtungskörper
- 11: Befestigungsriemen
- 12: Beobachter
- 13: Kopf

## Patentansprüche

1. Gesichts- und Blendschutzvorrichtung (1) für die Beobachtung eines Objektfeldes, resp. Arbeitsplatzes mit zeitlich und/oder räumlich wechselnden Lichtintensitätsunterschieden, insbesondere für Schweisser, welche Vorrichtung (1) mindestens eine elektronische Kamera (4) zur Erzeugung elektronischer Bildsignale, mindestens einen Sensor (5) zur Erzeugung elektronischer Messdaten, mindestens eine Elektronik (8) für die Verarbeitung der Bildsignale und Messdaten, sowie mindestens ein Display für die optisches Anzeige des Objektfeldes und der gemessenen Daten, aufweist,
**dadurch gekennzeichnet, dass** die Vorrichtung mindestens zwei elektronische Kameras (4) mit unterschiedlicher spektraler und/oder räumlicher Auflösung umfasst, wobei die Elektronik (8) Mittel zur Bildanalyse aufweist, welche Bildanalyse-Mittel die Bildsignale dieser unterschiedlichen elektronischen Kameras (4) und vorzugsweise die Messdaten des mindestens einen Sensors (5) analysieren, wobei die Elektronik (8) Mittel zur Erzeugung eines virtuellen Bildes des Objektfeldes aufweist, welche Bilderzeugungs-Mittel die analysierten Bildsignale zu einem virtuellen Bild synthetisieren, derart, dass das gesamte Objektfeld unabhängig von dessen spektralen und topologischen Verhältnissen für das menschliche Auge im Display detailliert erkennbar ist.

2. Gesichts- und Blendschutzvorrichtung (1) nach Anspruch 1, **dadurch gekennzeichnet, dass** diese Vorrichtung (1) für jedes Auge einen eigenen Display umfasst.

3. Gesichts- und Blendschutzvorrichtung (1) nach Anspruch 2, **dadurch gekennzeichnet, dass** die Elektronik (8) Mittel zur Erzeugung eines 3-dimensionales virtuelles Bildes (Virtual Reality Image) des Objektfeldes aufweist.

4. Gesichts- und Blendschutzvorrichtung (1) nach Anspruch 1, **dadurch gekennzeichnet, dass** die Bildsensoren aus unterschiedlichen Halbleitermaterialien, insbesondere aus Silizium, Gallium, Germanium oder Kombinationen davon, aufgebaut sind.

5. Gesichts- und Blendschutzvorrichtung (1) nach Anspruch 1, **dadurch gekennzeichnet, dass** die Kameras (4) eine Miniaturoptik aufweisen.

6. Gesichts- und Blendschutzvorrichtung (1) nach Anspruch 3, **dadurch gekennzeichnet, dass** Bildanalyse-Mittel elektronische Mittel zur Bestimmung der räumlichen Auflösung und/oder zur Bestimmung der Helligkeitsverteilung und -Intensität und/oder zur Bestimmung der Farb- und Temperaturverteilung und/oder zur Bestimmung der Spektralverteilung aufweisen.

7. Gesichts- und Blendschutzvorrichtung (1) nach einem der Ansprüche 1 bis 5, **dadurch gekennzeichnet, dass** deren Elektronik Mittel für die Spracherkennung aufweist.

8. Gesichts- und Blendschutzvorrichtung (1) nach einem der Ansprüche 1 bis 5, **dadurch gekennzeichnet, dass** deren Elektronik Mittel für die Erzeugung akustischer Signale aufweist.

9. Gesichts- und Blendschutzvorrichtung (1) nach einem der Ansprüche 1 bis 5, **dadurch gekennzeichnet, dass** deren Elektronik Mittel für die Steuerung von mindestens einer zusätzlichen Beleuchtungsquelle (9) und/oder eines anderen peripheren Gerätes, wie bspw. ein Frischluftaggregat, aufweist.

10. Gesichts- und Blendschutzvorrichtung (1) nach einem der Ansprüche 1 bis 5, **dadurch gekennzeichnet, dass** deren Elektronik Mittel für die Speicherung benutzerspezifische Einstellungen aufweist.

11. Gesichts- und Blendschutzvorrichtung (1) nach einem der Ansprüche 1 bis 5, **dadurch gekennzeichnet, dass** deren Elektronik Mittel (6,7) für die draht- und/oder fasergebundene und/oder drahtlose Übermittlung von Datensignalen aufweist.

## Claims

1. Face and antiglare protection device (1) for observing an object field or a workplace with light intensity differences varying in time and/or space, in particular for welders, said device (1) having at least one electronic camera (4) for generating electronic image signals, at least one sensor (5) for generating electronic measuring data, at least one electronic system (8) for processing the image signals and measuring data, as well as at least one display for the optical representation of the object field and the measured data,
wherein said device comprises at least two electronic cameras (4) having differing spectral and/or spatial resolution, whereby the electronic system (8) comprises means for image analysis, said image analysis means analyzing the image signals captured by said differing cameras (4) and preferably analyzing the measuring data of the at least one sensor (5), whereby the electronic system (8) comprises means for generating a virtual image of the object field, said image generating means synthesizing the analyzed image signals to create a virtual image in such a manner that the entire object field can be recognized in detail on the display by the human eye, irrespective of its spectral and topological conditions.

2. Face and antiglare protection device (1) according to claim 1, wherein said device (1) comprises an individual display for each eye.

3. Face and antiglare protection device (1) according to claim 2, wherein said electronic system (8) has means for generating a three-dimensional virtual image (Virtual Reality Image) of the object field.

4. Face and antiglare protection device (1) according to claim 1, wherein the image sensors are made of different semiconductor materials, in particular silicium, gallium, germanium or combinations thereof.

5. Face and antiglare protection device (1) according to claim 1, wherein said cameras (4) have miniature optics.

6. Face and antiglare protection device (1) according to claim 3, wherein the image analysis means have electronic means for determining the spatial resolution, and/or for determining luminosity distribution and intensity, and /or for determining colour and temperature distribution, and /or for determining spectral distribution.

7. Face and antiglare protection device (1) according to one of claims 1 to 5, wherein the electronics have means for language recognition.

8. Face and antiglare protection device (1) according to one of claims 1 to 5, wherein the electronics have means for generating acoustic signals.

9. Face and antiglare protection device (1) according to one of claims 1 to 5, wherein the electronics have means for controlling at least one additional lighting source (9) and/or another peripheral apparatus such as, for example, a fresh air assembly.

10. Face and antiglare protection device (1) according to one of claims 1 to 5, wherein the electronics have means for storing user-specific settings.

11. Face and antiglare protection device (1) according to one of claims 1 to 5, wherein the electronics have means (6, 7) for wire- and/or fibre-linked and/or wireless transmission of data signals.

## Revendications

1. Dispositif de protection pour le visage et anti-éblouissement (1) destiné à l'observation d'un champ d'objet et/ou d'un poste de travail avec des différences d'intensité lumineuse variables dans le temps et/ou dans l'espace, destiné en particulier à des soudeurs, lequel dispositif (1) présente au moins une caméra électronique (4) pour la production de signaux d'image électroniques, au moins un capteur (5) pour la production de données de mesure électroniques, au moins un système électronique (8) pour le traitement des signaux d'image et des données de mesure, ainsi qu'au moins un écran pour l'affichage optique du champ d'objet et des données mesurées,
**caractérisé en ce que** le dispositif comprend au moins deux caméras électroniques (4) à résolution spectrale et/ou spatiale différente, le système électronique (8) présentant des moyens d'analyse d'image, lesquels moyens d'analyse d'image analysent les signaux d'image de ces différentes caméras électroniques (4) et de préférence les données de mesure de l'au moins un capteur (5), le système électronique (8) présentant des moyens de production d'une image virtuelle du champ d'objet, lesquels moyens de production d'images synthétisent les signaux d'image analysés en une image virtuelle de telle sorte que l'ensemble du champ d'objet est visible de manière détaillée sur l'écran par l'oeil humain indépendamment de ses rapports spectraux et topologiques.

2. Dispositif de protection pour le visage et anti-éblouissement (1) selon la revendication 1, **caractérisé en ce que** ce dispositif (1) comprend un écran propre à chaque oeil.

3. Dispositif de protection pour le visage et anti-éblouissement (1) selon la revendication 2, **caractérisé en ce que** le système électronique (8) présente des moyens de production d'une image virtuelle en trois dimensions (Virtual Reality Image) du champ d'objet.

4. Dispositif de protection pour le visage et anti-éblouissement (1) selon la revendication 1, **caractérisé en ce que** les capteurs d'image sont formés de différents matériaux semi-conducteurs, en particulier de silicium, gallium, germanium ou des combinaisons de ceux-ci.

5. Dispositif de protection pour le visage et anti-éblouissement (1) selon la revendication 1, **caractérisé en ce que** les caméras (4) présentent un objectif miniature.

6. Dispositif de protection pour le visage et anti-éblouissement (1) selon la revendication 3, **caractérisé en ce que** des moyens d'analyse d'image présentent des moyens électroniques de détermination de la résolution spatiale et/ou de détermination de la distribution et de l'intensité lumineuse et/ou de détermination de la distribution de la couleur et de la température et/ou de détermination de la distribution spectrale.

7. Dispositif de protection pour le visage et anti-éblouissement (1) selon l'une quelconque des revendications 1 à 5, **caractérisé en ce que** son système électronique présente des moyens de détection vocale.

8. Dispositif de protection pour le visage et anti-éblouissement (1) selon l'une quelconque des revendications 1 à 5, **caractérisé en ce que** son système électronique présente des moyens de production de signaux acoustiques.

9. Dispositif de protection pour le visage et anti-éblouissement (1) selon l'une quelconque des revendications 1 à 5, **caractérisé en ce que** son système électronique présente des moyens de commande d'au moins une source de lumière supplémentaire (9) et/ou d'un autre appareil périphérique, comme par exemple une unité d'air frais.

10. Dispositif de protection pour le visage et anti-éblouissement (1) selon l'une quelconque des revendications 1 à 5, **caractérisé en ce que** son système électronique présente des moyens d'enregistrement de réglages spécifiques à l'utilisateur.

11. Dispositif de protection pour le visage et anti-éblouissement (1) selon l'une quelconque des revendications 1 à 5, **caractérisé en ce que** son système électronique présente des moyens (6, 7) de transmission sur fil et/ou sur fibre et/ou sans fil de signaux de données.
